# FASCICULE DE BREVET EUROPEEN

(11) **EP 1 441 154 B1**
(45) Date de publication et mention de la délivrance du brevet: **11.01.2006**
(21) Numéro de dépôt: 04290147.0
(22) Date de dépôt: 20.01.2004
(51) Int. Cl.: F16H 61/28

(54) **Dispositif de commande de boîte de vitesses manuelle pilotée à manchon rotatif et méthode de changement de rapport associé**
Steuervorrichtung für ein automatisiertes Handschaltgetriebe mit einer rotierenden Hülse und dem zugehörigen Schaltverfahren
Command device for an automated manual transmission (AMT) with a sleeve tube surrounding the selection rod and method to shift into the associated gear

(30) Priorité: 22.01.2003 FR 0300673
(43) Date de publication de la demande: 28.07.2004
(73) Titulaire: Peugeot Citroen Automobiles S.A., 78140 Vélizy Villacoublay (FR)
(72) Inventeur: Wascheul, Michael, 78260 Acheres (FR); Gabucci, Stéphane, 92250 La Garenne Colombes (FR); Heckly, Alain, 27220 Saint Laurent des Bois (FR)
(74) Mandataire: Thinat, Michel

(56) Documents cités:
- DE-C- 19 737 305
- FR-A- 2 764 029
- FR-A- 2 797 017

## Description

L'invention concerne en général l'industrie automobile.

Plus précisément, l'invention concerne selon un premier aspect, un dispositif de commande d'une boîte de vitesses manuelle pilotée comprenant un dispositif de commande interne logé dans le carter de la boîte de vitesses et un dispositif électromécanique d'actionnement du dispositif de commande interne, ce dispositif de commande interne comprenant un axe de sélection longitudinal sélectivement mobile par coulissement longitudinal entre une pluralité de positions axiales prédéterminées, et un doigt transversal de passage de vitesse lié en translation longitudinale à l'axe de sélection et sélectivement mobile par coulissement longitudinal de l'axe de sélection entre une pluralité de positions longitudinales de sélection, correspondant chacune à une position axiale de l'axe, dans laquelle le doigt est engagé dans l'un de plusieurs éléments d'engagement de rapports par l'intermédiaire respectivement de tiges parallèles coulissantes auxquelles sont solidarisées des fourchettes de déplacement de crabots permettant de réaliser l'engagement ou le dégagement des différents rapports de la boîte de vitesses, le doigt étant également mobile par rotation autour de l'axe de symétrie dé l'axe de sélection à partir de chaque position de sélection jusqu'à au moins une position d'engagement de façon à entraîner l'élément sélectionné et à réaliser l'engagement d'un rapport.

Le document FR 2 797 017 apparaît être l'état de la technique le plus proche et montre des dispositifs de ce type présentant le défaut d'être mécaniquement complexes et encombrants.

Par ailleurs, les constructeurs de véhicules automobiles cherchent à réduire autant que possible la durée de la rupture de couple pendant le changement de rapport de boîte de vitesses et donc à augmenter la rapidité du passage d'un rapport à un autre.

Le problème ennoncé ci-dessus est résolu à l'aide des revendications indépendantes 1 et 10.

Dans ce contexte, la présente invention a pour but de répondre aux points mentionnés ci-dessus en proposant un système plus compact et de meilleur rendement mécanique.

A cette fin, le dispositif de l'invention, par ailleurs conforme à la définition générique qu'en donne le préambule ci-dessus, est essentiellement caractérisé en ce que le dispositif de commande interne comprend un manchon, notamment, cylindrique, entourant l'axe de commande et présentant au moins une fente droite longitudinale dans laquelle le doigt de commande est engagé, de telle sorte que le doigt est libre en translation dans la fente et solidaire en rotation du manchon, le dispositif électromécanique de commande comprenant un moteur de coulissement déplaçant l'arbre en translation longitudinale relativement au manchon, et un moteur de rotation entraînant le manchon en rotation autour de l'axe de symétrie.

Dans un mode de réalisation possible de l'invention, la fente est délimitée par deux bords longitudinaux opposés parallèles présentant un écartement correspondant à la largeur du doigt dans un plan perpendiculaire à l'axe de symétrie, de telle sorte que le doigt est guidé en translation longitudinale par les bords longitudinaux de la fente et entraîné en rotation autour de l'axe de symétrie par lesdits bords.

Avantageusement, le manchon comprend une partie tubulaire entourant l'axe de sélection et une roue dentée solidaire d'une première extrémité de la partie tubulaire, le dispositif électromécanique de commande comprenant une démultiplication de rotation transmettant le mouvement de rotation du moteur de rotation à la roue dentée.

Par exemple, le moteur de coulissement est disposé d'un côté du manchon opposé à la première extrémité.

Avantageusement, le moteur de coulissement est disposé du côté de la première extrémité du manchon.

De préférence, le doigt est monté libre en translation sur l'axe de sélection, le dispositif de commande interne comprenant deux organes d'appui solidaires de l'axe de sélection et disposés de part et d'autre du doigt le long de cet axe, deux organes élastiques interposés entre le doigt et les deux organes d'appui, une plaque fixe présentant une fente en forme de grille de vitesses, et une goupille solidaire du doigt et engagée dans la grille, cette grille comprenant un tronçon longitudinal dans lequel sont définies des positions de branchement correspondants aux positions longitudinales de sélection du doigt, et une pluralité de bras s'étendant transversalement à partir des positions de branchement d'un côté ou de l'autre du tronçon longitudinal et correspondants aux positions d'engagement du doigt, la goupille passant d'un bras à un autre en suivant la grille quand le doigt de sélection passe d'une position d'engagement à une autre.

Par exemple, la goupille est alignée avec le doigt ou forme un angle sensiblement obtu par rapport au doigt.

Avantageusement, la partie tubulaire du manchon comprend une fenêtre de taille correspondante à celle de la grille, la grille étant disposée en regard de la fenêtre, la goupille traversant la fenêtre pour s'engager dans la grille.

De préférence, le doigt est solidaire de l'axe de sélection.

Selon un second aspect, l'invention concerne une méthode de changement de rapport de boîte de vitesses à l'aide d'un dispositif de commande présentant les caractéristiques avantageuses décrites ci-dessus, caractérisée en ce qu'elle comprend les étapes suivantes :
1/ engager un premier rapport en déplaçant d'abord l'axe de sélection jusqu'à une première position axiale correspondant à une première position de sélection du doigt, puis déplacer le doigt jusqu'à une première position d'engagement par rotation du manchon, la goupille étant alors engagée dans un premier bras ;
2/ déplacer l'axe de sélection jusqu'à une seconde position axiale, ce qui a pour effet de comprimer un des organes élastiques ;
3/ ramener le doigt de sa première position d'engagement jusqu'à sa première position de sélection en faisant pivoter la manchon, l'organe élastique comprimé se détendant alors et amenant automatiquement le doigt dans une seconde position de sélection correspondant à la seconde position axiale de l'axe de sélection,
4/ faire pivoter le manchon pour amener le doigt de sa seconde position de sélection à une seconde position d'engagement.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un dispositif de commande de l'art antérieur,
- la figure 2 est une vue schématique en coupe longitudinale du dispositif de l'invention,
- la figure 3 est une vue en coupe suivant les flèches III de la figure 2,
- la figure 4 est une vue en perspective de l'axe de sélection, du doigt de commande et d'une partie du manchon de la figure 2,
- la figure 5a est une vue en coupe longitudinale d'une variante de réalisation de l'invention, le doigt de commande étant représenté dans une première position d'engagement,
- la figure 5b est une vue de dessus de la plaque de la figure 5a,
- la figure 6a est une figure équivalente à la figure 5a, représentant l'état du dispositif de la figure 5a quand l'axe de sélection a été déplacé à une seconde position axiale,
- la figure 6b est une vue de dessus de la plaque de la figure 6a,
- la figure 7a est une figure équivalente à la figure 5a, représentant l'état du dispositif de la figure 6a quand le manchon a subi une rotation autour de l'axe de symétrie X-X', et
- la figure 7b est une vue de dessus de la plaque de la figure 7a.

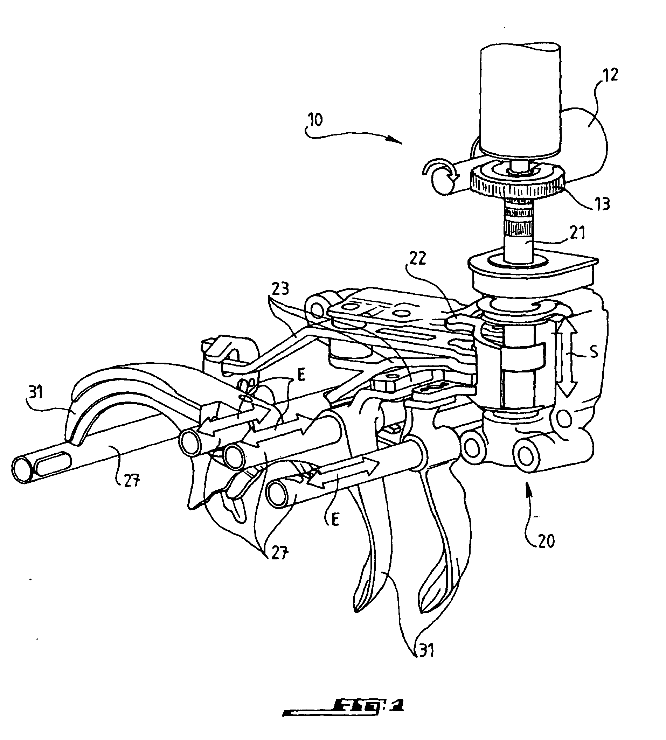

Le dispositif de commande représenté sur la figure 1 illustre l'état de l'art antérieur et comprend un dispositif de commande interne 20 logé dans le carter de la boîte de vitesses, ce carter n'étant pas représenté, et un dispositif électromécanique 10 d'actionnement du dispositif de commande interne 20 commandant les changements de rapport de boîte de vitesses.

Le dispositif de commande interne 20 comprend un axe de sélection longitudinal 21 sélectivement mobile par coulissement longitudinal entre une pluralité de positions axiales prédéterminées, et un doigt transversal de passage de vitesse 22 lié en translation longitudinale à l'axe de sélection 21.

Le doigt 22 est sélectivement mobile par coulissement longitudinal de l'axe de sélection 21, entre une pluralité de positions longitudinales de sélection correspondants aux positions axiales de l'axe de sélection 21.

Une de ces positions de sélection correspond au point mort de la boîte de vitesses. Dans les autres positions de sélection, le doigt 22 est engagé dans l'un de plusieurs éléments 23, aptes à engager des rapports par l'intermédiaire respectivement de tiges parallèles coulissantes 27 auxquelles sont solidarisées des fourchettes 31 de déplacement de crabots permettant de réaliser l'engagement ou le dégagement des différents rapports de la boîte de vitesses.

Le doigt 22 est également mobile par rotation autour de l'axe de symétrie X-X' de l'axe de sélection 21, à partir de chacune de ses positions de sélection, dans l'un et/ou l'autre sens de rotation opposés, jusqu'à une position d'engagement.

En passant d'une position de sélection à une position d'engagement, le doigt 22 entraîne l'élément 23 sélectionné en rotation, celui-ci faisant coulisser la tige 27 associée, et réalisant l'engagement d'un rapport.

Le déplacement du doigt 22 par coulissement longitudinal de l'axe de sélection 21 pour sélectionner un élément 23 est représenté par une flèche S sur la figure 1.

Le déplacement des tiges parallèles 27 résultant de la rotation du doigt 22 est représenté par ces flèches E sur la figure 1.

L'axe de sélection 21 est typiquement mobile entre quatre positions axiales longitudinales, et le doigt de commande 22 entre quatre positions de sélection, dont le point mort.

Selon l'invention, le dispositif de commande interne 20 comprend un manchon 40, notamment cylindrique, entourant l'axe de sélection 21, et présentant au moins une fente droite longitudinale 41 dans laquelle le doigt de commande 22 est engagé.

Le doigt 22 est libre en translation dans la fente 41 et solidaire du manchon 40 en rotation autour de l'axe de symétrie X-X'. L'axe de sélection 21 est libre en translation et en rotation autour de l'axe x-x' relativement au manchon 40.

Par ailleurs, le dispositif électromécanique de commande comprend un moteur de coulissement, non représenté, déplaçant l'arbre 21 en translation longitudinale relativement au manchon 40, et un moteur de rotation 12 entraînant le manchon 40 en rotation autour de l'axe de symétrie X-X'.

A cet effet, le manchon 40 comprend une partie tubulaire 42 d'axe de symétrie X-X' entourant l'axe de sélection 21 et portant la fente 41, et une roue dentée 43 solidaire d'une première extrémité 421 de la partie tubulaire 42.

Le dispositif électromécanique de commande comprend une démultiplication de rotation 13 transmettant le mouvement de rotation du moteur de rotation 12 à la roue dentée 43. Ce dispositif de démultiplication comprend typiquement une roue dentée meneuse 131 d'axe de rotation parallèle à l'axe de symétrie X-X', entraînée en rotation par le moteur de rotation 12 et engrenant la roue dentée 43 du manchon. Le moteur de rotation 12 est apte à faire tourner la roue dentée meneuse 131 dans les deux sens de rotation opposés.

La démultiplication peut également être réalisée par une vis sans fin entraînée par le moteur 12 et entraînant elle-même la roue dentée 43 du manchon.

Le dispositif électromécanique de commande comprend également une démultiplication de coulissement transformant le mouvement de rotation du moteur de coulissement en un mouvement de translation de l'axe de sélection 21.

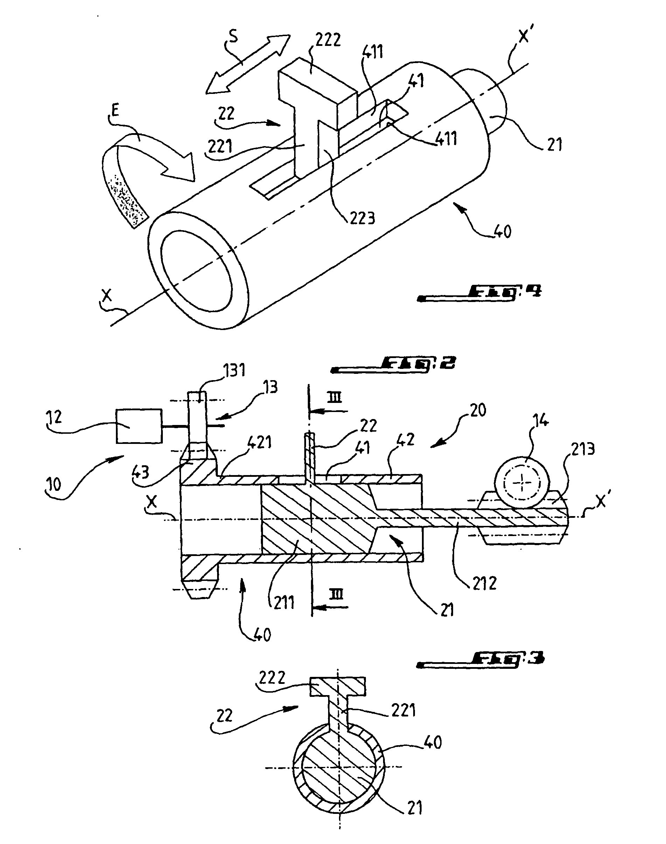

Comme le montre la figure 2, l'axe de sélection 21 comprend une première partie axiale 211 disposée dans le manchon 40 et une seconde partie axiale 212 solidaire de la première et prolongeant axialement celle-ci d'un côté opposé à la première extrémité 421 de la partie tubulaire 42.

La seconde partie axiale 212 dépasse partiellement d'un côté de la partie tubulaire 42 opposé à la première extrémité 421 et porte un filetage 213 formant crémaillère à une extrémité libre opposée à la première partie axiale 211.

La démultiplication de coulissement comprend par exemple un pignon 14 d'axe de rotation perpendiculaire à l'axe de symétrie X-X', engrenant la crémaillère 213 et entraînée en rotation par le moteur de coulissement.

Le moteur de coulissement est apte à faire tourner le pignon 14 dans les deux sens de rotation opposés.

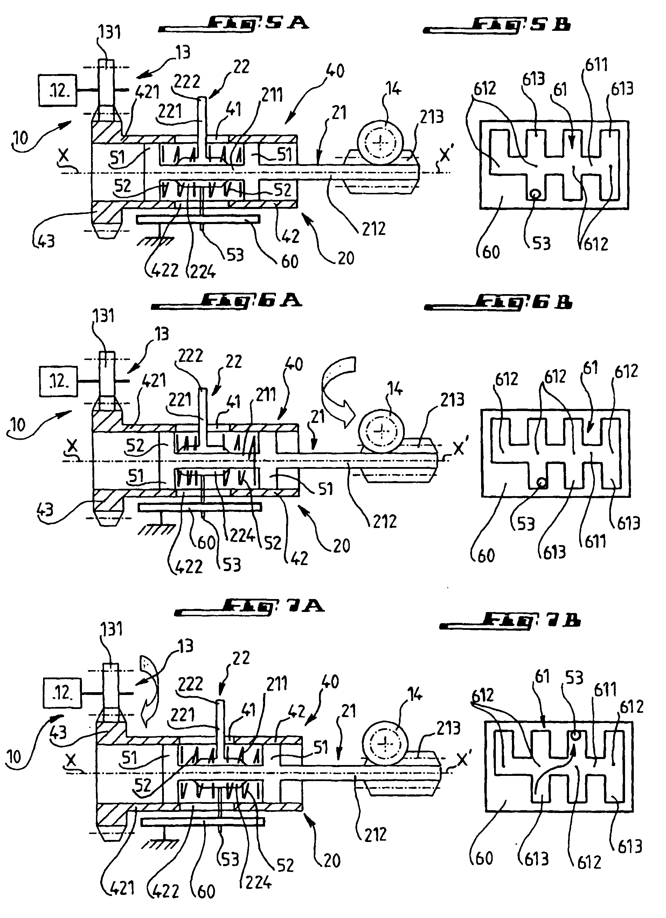

La fente 41, comme on le voit sur la figure 4, est délimitée par deux bords longitudinaux opposés 411, droits et parallèles, présentant un écartement constant dans un plan perpendiculaire à l'axe de symétrie X-X'.

Le doigt de passage 22 présente, dans un plan perpendiculaire à l'axe de symétrie X-X', une forme de T. Il comprend une tige 221 s'étendant à partir de la première partie axiale 211 de l'axe de sélection 21 et perpendiculairement à celui-ci, et une tête 222 solidaire d'une extrémité de la tige 221 opposée à la première partie axiale 211 et venant s'engager dans les éléments d'engagement de rapport 23. La tige 221 constitue la barre verticale du T et la tête 222 la barre horizontale du T.

La tige 221 présente une section droite rectangulaire et est engagée dans la fente 41. Elle présente en regard des bords longitudinaux opposés 411 deux faces planes opposée 223, la largeur du doigt de sélection 22 séparant les deux faces planes 223 correspondant à l'écartement des bords longitudinaux 411, de telle sorte que le doigt 22 est guidé en translation longitudinale par les deux faces planes 223 glissant le long des bords longitudinaux 411 de la fente 41.

Le doigt 22 est également entraîné en rotation autour de l'axe de symétrie X-X' par lesdits bords longitudinaux 411 coopérant avec les faces planes 223.

La tête 222 présente également une section droite sensiblement rectangulaire. Elle est solidaire de la tige 221 par une partie centrale.

Dans un premier mode de réalisation de l'invention, représenté sur les figures 2 et 3, le doigt de passage 22 est solidaire de l'axe de sélection 21 par une extrémité de sa tige 221 opposée à la tête 222.

Le doigt de passage 22 est ainsi directement entraîné en translation longitudinale par l'axe de sélection 21.

Dans un second mode de réalisation, représenté sur les figures 5A/B à 7A/B, le doigt de passage 22 est monté libre en translation et en rotation sur l'axe de sélection 21. Le doigt 22 comprend à cet effet une bague cylindrique 224 monté libre en translation et en rotation sur l'axe, la tige 221 du doigt 22 étant solidaire de cette bague 224 par une extrémité opposée à la tête 222.

Le dispositif de commande interne 20 comprend deux organes d'appui 51 solidaires de l'axe de sélection 21 et disposés de part et d'autre du doigt 22 le long de cet axe, deux organes élastiques 52 interposés entre le doigt 22 et les deux organes d'appui 51, une plaque fixe 60 présentant une fente en forme de grille de vitesses 61, et une goupille 53 solidaire du doigt 22 et engagée dans la grille 61.

Les organes élastiques 52 sont des ressorts en spirale enfilés autour de la deuxième partie axiale 212 de l'axe de sélection 21.

Les organes d'appui 51 sont des coupelles s'étendant dans des plans perpendiculaire à l'axe de symétrie X-X', sur lesquelles les ressorts en spirales viennent prendre appui par des premières extrémités respectives. Des secondes extrémités respectives de ces ressorts opposés aux premières viennent en appui directement sur la tige 221 du doigt 22, ou sur une portée de ressort en anneau, non représentée, solidaire de cette tige 221.

La plaque 60 est fixe relativement au carter de la boîte de vitesses.

La grille 61 est découpé dans cette plaque et comprend un tronçon droit longitudinal 611 dans lequel sont définies des positions de branchement 612 de la goupille 53 correspondants aux positions longitudinales de sélection du doigt 22, et une pluralité de bras 613 s'étendant transversalement à partir des positions de branchement 612 d'un côté ou de l'autre du tronçon longitudinal 611 et correspondants aux positions d'engagement du doigt 22.

La grille 61 représentée sur les figures 5B, 6B et 7B comprend quatre position de branchement 612, quatre bras 613 s'étendant d'un premier côté du tronçon longitudinal 611, chacun à partir d'une position de branchement 612 différente, trois bras 613 s'étendant d'un second côté du tronçon longitudinal opposé au premier, chacun à partir d'une position de branchement 612 différente.

La grille 61 comprend donc trois positions de branchement 612 dont partent deux bras 613 mutuellement alignés, et une position de branchement dont part un seul bras 613.

Chaque bras 613 est un segment droit se terminant par une extrémité borgne.

La goupille 53 passe d'un bras 613 à un autre en suivant la grille 61 quand le doigt de commande 22 passe d'une position d'engagement à une autre.

Comme le montre la figure 5A, la plaque fixe 60 est disposée à proximité du manchon 40, d'un côté de celui-ci opposé à la fente 41, dans un plan pratiquement tangent au manchon 40.

La partie tubulaire 42 du manchon 40 comprend du côté de la plaque 60 une fenêtre 422 de taille correspondante à celle de la grille 61, la grille 61 étant disposée en regard de la fenêtre 422.

La goupille 53 est alignée avec le doigt 22 et s'étend dans une direction opposée à celle du doigt 22.

Elle traverse la fenêtre 422 pour s'engager dans la grille 61.

La goupille 53 est une tige typiquement cylindrique de diamètre nettement plus faible que la largeur des bras 613 et du tronçon longitudinal de la grille 61.

En fonctionnement normal du dispositif de commande, le doigt 22 est d'abord entraîné en translation longitudinale par l'axe de sélection 21, par l'intermédiaire des ressorts en spirale 52 venant en appui simultanément des deux côté longitudinaux opposés du doigt 22. La goupille 53 se déplace parallèlement le long du tronçon longitudinal 611. Le doigt 22 est ensuite entraîné en rotation autour de l'axe de symétrie X-X' par le manchon 40, et tourne librement autour de l'axe de sélection 21. La goupille 53 se déplace alors parallèlement d'une position de branchement 612 jusqu'à l'extrémité d'un bras 613.

La grille de vitesses 61 et la goupille 53 peuvent être utilisées pour accélérer les changements de rapports de boîte de vitesses en effectuant une présélection de la position de sélection du doigt 22, de la façon illustrée sur les figures 5A/B à 7A/B.

On décrit ci-dessous une séquence dans laquelle un premier rapport est engagé de façon normale, sans présélection, puis dans laquelle le passage du premier rapport à un second rapport est effectué avec présélection.
1/ Un premier rapport est engagé en déplaçant d'abord l'axe de sélection 21 jusqu'à une première position axiale correspondant à une première position de sélection du doigt 22, puis en déplaçant le doigt 22 jusqu'à une première position d'engagement par rotation du manchon 40, la goupille 53 étant alors engagée dans un premier bras 613. Cette situation est représentée sur les figures 5A et 5B.
2/ La présélection est ensuite effectuée en déplaçant l'axe de sélection 21 jusqu'à une seconde position axiale, ce qui a pour effet de comprimer un des ressorts en spirale 52.
   Cette situation est représentée sur les figures 6A et 6B. Le doigt 22 est sollicité dans le sens de déplacement de l'axe de sélection 21 par le ressort 52, mais est bloqué par la goupille 53 venant en appui contre un bord du bras 613 dans lequel cette goupille est engagée. L'autre ressort en spirale 52 n'est plus en appui sur le doigt 22. Le doigt 22 ne se déplace pas.
3/ Le dégagement du premier rapport est effectué en ramenant le doigt 21 de sa première position d'engagement jusqu'à sa première position de sélection par pivotement du manchon 40. Le ressort 52 comprimé se détend alors et amène automatiquement le doigt 22 dans une seconde position de sélection correspondant à la seconde position axiale de l'axe de sélection 21.
4/ Enfin, le second rapport est engagé en faisant pivoter le manchon 40 pour amener le doigt 22 de sa seconde position de sélection à une seconde position d'engagement correspondant au second rapport. Cette situation est représentée sur les figures 7A et 7B. La flèche représentée sur la figure 7B indique le parcours effectué par la goupille aux étapes 3/ et 4/.

Cette séquence est plus rapide que la séquence normale de passage du premier au second rapport, puisque le déplacement de l'axe de sélection de sa première à sa seconde position axiale (étape 2) est effectué en temps masqué, avant que le premier rapport ne soit dégagé. Par ailleurs, les moteurs de coulissement et de rotation fonctionnent séquentiellement, et non simultanément, ce qui rend le pilotage du dispositif particulièrement simple. La consommation d'électricité des moteurs est également diminuée.

Le temps pendant lequel il y a rupture du couple moteur est donc diminué.

Par ailleurs, on notera que, dans ses deux modes de réalisation, le dispositif est particulièrement compact. Le nombre de pièces mises en jeu est limité et ces pièces sont de formes simples. En particulier, la liaison entre le manchon et le doigt ne demande que des usinages simples.

L'inertie des pièces est réduite, et les moteurs de coulissement et de rotation sont donc de puissances et d'encombrements réduits.

La partie tubulaire 42 du manchon 40 et la première partie axiale 211 ou les organes d'appuis 51 sont de sections complémentaires, par exemple carrées, ou rondes comme dans l'exemple de réalisation représenté sur les figures.

Pour des raisons d'implantation, le moteur de coulissement 14 peut être disposé du même côté du manchon 40 que le moteur de rotation 13, ou d'un côté opposé, comme représenté sur la figure 2.

Enfin, l'ensemble formé par la grille 60 et la goupille 53 peut être implanté aligné avec le doigt 22, ou non aligné, la goupille 53 formant alors de préférence un angle obtus par rapport au doigt 22. La goupille peut également former un angle droit avec le doigt, voire même, dans des cas extrêmes, un angle aigu.

## Revendications

1. Dispositif de commande d'une boîte de vitesses manuelle pilotée comprenant un dispositif de commande interne (20) logé dans le carter de la boîte de vitesses et un dispositif électromécanique d'actionnement (10) du dispositif de commande interne (20), ce dispositif de commande interne (20) comprenant un axe de sélection (21) longitudinal sélectivement mobile par coulissement longitudinal entre une pluralité de positions axiales prédéterminées, et un doigt transversal de passage de vitesse (22) lié en translation longitudinale à l'axe de sélection (21) et sélectivement mobile par coulissement longitudinal de l'axe de sélection (21) entre une pluralité de positions longitudinales de sélection correspondant chacune à une position axiale de l'axe, dans laquelle le doigt (22) est engagé dans l'un de plusieurs éléments (23) d'engagement de rapports par l'intermédiaire de tiges parallèles coulissantes (27) auxquelles sont solidarisées des fourchettes (31) de déplacement de crabots permettant de réaliser l'engagement ou le dégagement des différents rapports de la boîte de vitesses, le doigt (22) étant également mobile par rotation autour de l'axe de symétrie (X-X') de l'axe de sélection (21) à partir de chaque position de sélection jusqu'à au moins une position d'engagement de façon à entraîner l'élément (23) sélectionné et à réaliser l'engagement d'un rapport, **caractérisé en ce que** le dispositif de commande interne (20) comprend un manchon (40), notamment cylindrique, entourant l'axe de sélection (21) et présentant au moins une fente droite longitudinale (41) dans laquelle le doigt de passage (22) est engagé, de telle sorte que le doigt (22) est libre en translation dans la fente (41) et solidaire en rotation du manchon (40), le dispositif électromécanique de commande comprenant un moteur de coulissement déplaçant l'arbre (21) en translation longitudinale relativement au manchon (40), et un moteur de rotation (12) entraînant le manchon (40) en rotation autour de l'axe de symétrie (X-X').

2. Dispositif selon la revendication 1, **caractérisé en ce que** la fente (41) est délimitée par deux bords longitudinaux opposés parallèles (411) présentant un écartement correspondant à la largeur du doigt (22) dans un plan perpendiculaire à l'axe de symétrie (X-X'), de telle sorte que le doigt (22) est guidé en translation longitudinale par les bords longitudinaux (411) de la fente (41) et entraîné en rotation autour de l'axe de symétrie (X-X') par lesdits bords.

3. Dispositif selon la revendication 1 ou 2, **caractérisé en ce que** le manchon (40) comprend une partie tubulaire (42) entourant l'axe de sélection (21) et une roue dentée (43) solidaire d'une première extrémité (421) de la partie tubulaire (42), le dispositif électromécanique de commande comprenant une démultiplication de rotation (13) transmettant le mouvement de rotation du moteur de rotation (12) à la roue dentée (43).

4. Dispositif selon la revendication 3, **caractérisé en ce que** le moteur de coulissement est disposé d'un côté du manchon (40) opposé à la première extrémité (421).

5. Dispositif selon la revendication 3, **caractérisé en ce que** le moteur de coulissement est disposé du côté de la première extrémité (421) du manchon (40).

6. Dispositif selon l'une quelconque des revendications 1 à 5, **caractérisé en ce que** le doigt (22) est monté libre en translation sur l'axe de sélection (21), le dispositif de commande interne (20) comprenant deux organes d'appui (51) solidaires de l'axe de sélection (21) et disposés de part et d'autre du doigt (22) le long de cet axe, deux organes élastiques (52) interposés entre le doigt (22) et les deux organes d'appui (51), une plaque fixe (60) présentant une fente en forme de grille de vitesses (61), et une goupille (53) solidaire du doigt (22) et engagée dans la grille (61), cette grille (61) comprenant un tronçon longitudinal (611) dans lequel sont définies des positions de branchement (612) correspondants aux positions longitudinales de sélection du doigt (22), et une pluralité de bras (613) s'étendant transversalement à partir des positions de branchement (612) d'un côté ou de l'autre du tronçon longitudinal (611) et correspondants aux positions d'engagement du doigt (22), la goupille (53) passant d'un bras à un autre en suivant la grille (61) quand le doigt de passage (22) passe d'une position d'engagement à une autre.

7. Dispositif selon la revendication 6, **caractérisé en ce que** la goupille (53) est alignée avec le doigt (22) ou forme un angle sensiblement obtus par rapport au doigt (22).

8. Dispositif selon la revendication 7, **caractérisé en ce que** la partie tubulaire (42) du manchon (40) comprend une fenêtre (422) de taille correspondante à celle de la grille (61), la grille (61) étant disposée en regard de la fenêtre (422), la goupille (53) traversant la fenêtre (422) pour s'engager dans la grille (61).

9. Dispositif selon l'une quelconque des revendications 1 à 5, **caractérisé en ce que** le doigt (22) est solidaire de l'axe de sélection (21).

10. Méthode de changement de rapport de boîte de vitesses à l'aide d'un dispositif de commande selon l'une quelconque des revendications 6 à 8, **caractérisé en ce qu'**elle comprend les étapes suivantes :
1/ engager un premier rapport en déplaçant d'abord l'axe de sélection (21) jusqu'à une première position axiale correspondant à une première position de sélection du doigt (22), puis déplacer le doigt (22) jusqu'à une première position d'engagement par rotation du manchon (40), la goupille (53) étant alors engagée dans un premier bras (613) ;
2/ déplacer l'axe de sélection (21) jusqu'à une seconde position axiale, ce qui a pour effet de comprimer un des organes élastiques (52) ;
3/ ramener le doigt (22) de sa première position d'engagement jusqu'à sa première position de sélection en faisant pivoter la manchon (40), l'organe élastique (52) comprimé se détendant alors et amenant automatiquement le doigt (22) dans une seconde position de sélection correspondant à la seconde position axiale de l'axe de sélection (21),
4/ faire pivoter le manchon (40) pour amener le doigt (22) de sa seconde position de sélection à une seconde position d'engagement.

## Patentansprüche

1. Schaltvorrichtung für ein automatisiertes Handschaltgetriebe, mit einer internen Steuervorrichtung (20), die in dem Getriebegehäuse aufgenommen ist, und einer elektromechanischen Betätigungsvorrichtung (10) für die interne Steuervorrichtung (20), wobei diese interne Steuervorrichtung (20) eine längs verlaufende Wählstange (21) enthält, die selektiv zwischen einer Mehrzahl von vorgegebenen axialen Stellungen in Längsrichtung gleitbeweglich ist, sowie einen quer verlaufenden Gangschaltfinger (22), der längs verschiebbar mit der Wählstange (21) verbunden und selektiv zwischen einer Mehrzahl von Wähllängsstellungen durch eine Längsgleitbewegung der Wählstange (21) beweglich ist, die jeweils einer axialen Stellung der Stange entsprechen, in welcher der Finger (22) in eines von mehreren Gangeinlegelementen (23) mittels paralleler Gleitstangen (27) eingreift, mit denen Gabeln (31) zum Verlagern von Klauen fest verbunden sind, die es ermöglichen, verschiedene Gänge des Getriebes einzulegen bzw. freizugeben, wobei der Finger (22) auch um die Symmetrieachse (X-X') der Wählstange (21) ausgehend von jeder Wählstellung in zumindest eine Schaltstellung drehbeweglich ist, so dass das ausgewählte Element (23) mitgenommen wird und ein Gang eingelegt wird, **dadurch gekennzeichnet, dass** die interne Steuervorrichtung (20) eine insbesondere zylindrische Hülse (40) enthält, welche die Wählstange (21) umgibt und zumindest einen geraden Längsschlitz (41) aufweist, in welchen der Schaltfinger (22) eingreift, so dass der Finger (22) im Schlitz (41) frei verschiebbar und mit der Hülse (40) drehfest verbunden ist, wobei die elektromechanische Schaltvorrichtung einen Verschiebemotor enthält, welcher die Stange (21) relativ zur Hülse (40) in Längsrichtung verschiebt, sowie einen Rotationsmotor (12), welcher die Hülse (40) um die Symmetrieachse (X-X') drehend antreibt.

2. Vorrichtung nach Anspruch 1, **dadurch gekennzeichnet, dass** der Schlitz (41) von zwei parallel verlaufenden, gegenüberliegenden Längskanten (411) begrenzt wird, die einen Abstand aufweisen, welcher der Breite des Fingers (22) in einer zur Symmetrieachse (X-X') senkrechten Ebene entspricht, so dass der Finger (22) bei der Längsverschiebung von den Längskanten (411) des Schlitzes (41) geführt und von den genannten Kanten um die Symmetrieachse (X-X') drehend mitgenommen wird.

3. Vorrichtung nach Anspruch 1 oder 2, **dadurch gekennzeichnet, dass** die Hülse (40) ein rohrförmiges Teil (42) enthält, das die Wählstange (21) umgibt, sowie ein Zahnrad (43), das fest mit einem ersten Ende (421) des rohrförmigen Teils (42) verbunden ist, wobei die elektromechanische Schaltvorrichtung eine Drehübersetzung (13) enthält, welche die Drehbewegung des Rotationsmotors (12) auf das Zahnrad (43) überträgt.

4. Vorrichtung nach Anspruch 3, **dadurch gekennzeichnet, dass** der Verschiebemotor auf einer dem ersten Ende (421) entgegengesetzten Seite der Hülse (40) angeordnet ist.

5. Vorrichtung nach Anspruch 3, **dadurch gekennzeichnet, dass** der Verschiebemotor auf der Seite des ersten Endes (421) der Hülse (40) angeordnet ist.

6. Vorrichtung nach einem der Ansprüche 1 bis 5, **dadurch gekennzeichnet, dass** der Finger (22) frei verschiebbar an der Wählstange (21) gelagert ist, wobei die interne Steuervorrichtung (20) zwei Abstützglieder (51) enthält, die fest mit der Wählstange (21) verbunden und beiderseits des Fingers (22) entlang dieser Stange angeordnet sind, sowie zwei elastische Glieder (52), die zwischen dem Finger (22) und den beiden Abstützgliedem (51) eingefügt sind, eine feststehende Platte (60), welche einen Schlitz in Form eines Gangschaltgitters (61) aufweist, und einen Stift (53), der fest mit dem Finger (22) verbunden ist und in das Gitter (61) eingreift, wobei dieses Gitter (61) einen Längsabschnitt (611) aufweist, in welchem Verbindungspositionen (612) vorgegeben sind, die den längs verlaufenden Wählstellungen des Fingers (22) entsprechen, und eine Mehrzahl von Zweigen (613) enthält, die ausgehend von den Verbindungspositionen (612) auf der einen oder anderen Seite des Längsabschnitts (611) quer verlaufen und den Schaltstellungen des Fingers (22) entsprechen, wobei der Stift (53) dem Gitter (61) folgend von einem Zweig in einen anderen übergeht, wenn der Schaltfinger (22) von einer Schaltstellung in eine andere übergeht.

7. Vorrichtung nach Anspruch 6, **dadurch gekennzeichnet, dass** der Stift (53) mit dem Finger (22) fluchtet oder einen im wesentlichen stumpfen Winkel mit den Finger (22) bildet.

8. Vorrichtung nach Anspruch 7, **dadurch gekennzeichnet, dass** das rohrförmige Teil (42) der Hülse (40) ein Fenster (422) enthält, das in seiner Größe dem Gitter (61) entspricht, wobei das Gitter (61) dem Fenster (422) gegenüberliegend angeordnet ist und wobei der Stift (53) das Fenster (422) durchquert, um in das Gitter (61) einzugreifen.

9. Vorrichtung nach einem der Ansprüche 1 bis 5, **dadurch gekennzeichnet, dass** der Finger (22) fest mit der Wählstange (21) verbunden ist.

10. Verfahren zum Gangwechseln bei einem Schaltgetriebe mit Hilfe einer Schaltvorrichtung nach einem der Ansprüche 6 bis 8, **dadurch gekennzeichnet, dass** es folgende Schritte umfasst:
1) Einlegen eines ersten Gangs, indem zunächst die Wählstange (21) in eine erste axiale Stellung verlagert wird, welche einer ersten Wählstellung des Fingers (22) entspricht, dann Verlagem des Fingers (22) in eine erste Schaltstellung durch Drehen der Hülse (40), wobei der Stift (53) dann in einen ersten Zweig (613) eingreift,
2) Verlagem der Wählstange (21) in eine zweite axiale Stellung, wodurch eines der elastischen Glieder (52) zusammengedrückt wird,
3) Zurückführen des Fingers (22) aus seiner ersten Schaltstellung in seine erste Wählstellung unter Verschwenken der Hülse (40), wobei das zusammengedrückte elastische Glied (52) sich dabei entspannt und den Finger (22) automatisch in eine zweite Wählstellung bringt, welche der zweiten axialen Stellung der Wählstange (21) entspricht,
4) Verschwenken der Hülse (40), um den Finger (22) aus seiner zweiten Wählstellung in eine zweite Schaltstellung zu bringen.

## Claims

1. Command device for an automated manual transmission comprising an internal command device (20) housed in the case of the transmission and an electromechanical actuating device (10) for the internal command device (20), this internal command device (20) comprising a longitudinal selection shaft (21), which can be moved selectively by longitudinal sliding between several predetermined axial positions, and a transverse finger bar for changing speed (22) connected to the selection shaft (21) in longitudinal translation, which can move selectively by longitudinal sliding of the selection shaft (21) between several longitudinal selection positions, each corresponding to an axial position of the shaft, in which the finger bar (22) is engaged in one of several gear engaging elements (23) by means of sliding parallel rods (27), with which rails (31) for moving positive clutches are integral, allowing the various gears of the transmission to be engaged or disengaged, the finger bar (22) also being able to be moved by rotation around the axis of symmetry (X-X') of the selection shaft (21) from each selection position as far as at least one engagement position so as to carry along the selected element (23) and engage a gear, **characterised in that** the internal command device (20) comprises a sleeve (40), particularly cylindrical, surrounding the selection shaft (21) with at least a longitudinal right slit (41), in which the finger bar (22) is engaged so that the finger bar (22) is free in translation in the slit (41) and integral in rotation of the sleeve (40), the electromechanical command device comprising a sliding motor moving the shaft (21) in longitudinal translation in relation to the sleeve (40) and a rotation motor (12) carrying along the sleeve (40) in rotation around the axis of symmetry (X-X').

2. Device according to claim 1, **characterised in that** the slit (41) is delimited by two opposite parallel longitudinal edges (411) with a distance apart corresponding to the width of the finger bar (22) in a plane perpendicular to the axis of symmetry (X-X'), so that the finger bar (22) is guided in longitudinal translation by the longitudinal edges (411) of the slit (41) and carried along in rotation around the axis of symmetry (X-X') by these edges.

3. Device according to claim 1 or 2, **characterised in that** the sleeve (40) comprises a tubular part (42) surrounding the selection shaft (21) and a toothed wheel (43), which is integral with a first end (421) of the tubular part (42), the electromechanical command device comprising a rotation reduction (13) that transmits the rotation movement of the rotation motor (12) to the toothed wheel (43).

4. Device according to claim 3, **characterised in that** the sliding motor is arranged on one side of the sleeve (40) opposite the first end (421).

5. Device according to claim 3, **characterised in that** the sliding motor is arranged on the side of the first end (421) of the sleeve (40).

6. Device according to any one of claims 1 to 5, **characterised in that** the finger bar (22) is mounted free in translation on the selection shaft (21), the internal command device (20) comprising two supporting devices (51), which are integral with the selection shaft (21), arranged on either side of the finger bar (22) along this shaft, two flexible devices (52) interposed between the finger bar (22) and the two supporting devices (51), a fixed plate (60) with a slit in the form of a speed grid (61), and a pin (53), which is integral with the finger bar (22), engaged in the grid (61), this grid (61) comprising a longitudinal section (611), in which two connecting positions (612) are defined, corresponding to the longitudinal selection positions of the finger bar (22), and several arms (613) extending transversely from the connecting positions (612) on both sides of the longitudinal section (611) and corresponding to the engagement positions of the finger bar (22), the pin (53) passing from one arm to the other following the grid (61) when the finger bar (22) passes from one engagement position to another.

7. Device according to claim 6, **characterised in that** the pin (53) is aligned with the finger bar (22) or forms a more or less obtuse angle in relation to the finger bar (22).

8. Device according to claim 7, **characterised in that** the tubular part (42) of the sleeve (40) comprises a window (422) of a size corresponding to that of the grid (61), the grid (61) being arranged in relation to the window (422), the pin (53) crossing the window (422) to engage in the grid (61).

9. Device according to any one of claims 1 to 5, **characterised in that** the finger bar (22) is integral with the selection shaft (21).

10. Method for changing the gear of the transmission using a command device according to any one of claims 6 to 8, **characterised in that** it comprises the following stages:
1/ engaging a first gear by first moving the selection shaft (21) as far as a first axial position, corresponding to a first selection position of the finger bar (22), then moving the finger bar (22) as far as a first engagement position by rotation of the sleeve (40), the pin (53) then being engaged in a first arm (613);
2/ moving the selection shaft (21) as far as a second axial position, which has the effect of compressing one of the flexible devices (52);
3/ taking the finger bar (22) from its first engagement position as far as its first selection position by swivelling the sleeve (40), the compressed flexible device (52) then expanding and automatically taking the finger bar (22) into a second selection position, corresponding to the second axial position of the selection shaft (21),
4/ swivelling the sleeve (40) to take the finger bar (22) from its second selection position to a second engagement position.
